# EUROPÄISCHE PATENTSCHRIFT

(11) **EP 3 058 349 B1**
(45) Veröffentlichungstag und Bekanntmachung des Hinweises auf die Patenterteilung: **21.04.2021**
(21) Anmeldenummer: 14799675.5
(22) Anmeldetag: 14.10.2014
(51) Int. Cl.: G01N 21/64, G01N 21/25, G01J 3/02, G01J 3/10, G01J 3/32, G01J 3/44

(54) **MESSVORRICHTUNG**
MEASURING DEVICE
DISPOSITIF DE MESURE

(30) Priorität: 14.10.2013 EP 13188553; 02.05.2014 EP 14166852
(43) Veröffentlichungstag der Anmeldung: 24.08.2016
(73) Patentinhaber: OASE GmbH, 48477 Hörstel-Riesenbeck (DE)
(72) Erfinder: WILLUWEIT, Thomas, 95030 Hof (DE); GRIESBACH, Ralf, 95030 Hof (DE)
(74) Vertreter: Isarpatent
(86) Internationale Anmeldenummer: PCT/EP2014/071977
(87) Internationale Veröffentlichungsnummer: WO 2015/055627

(56) Entgegenhaltungen:
- US-A- 4 577 110
- US-A1- 2003 058 450
- US-A1- 2006 152 727
- US-B1- 7 926 322
- US-B2- 7 491 366

## Beschreibung

Die vorliegende Erfindung bezieht sich auf eine Messvorrichtung zum Analysieren einer Probe.

Allgemein bekannt sind Spektrometer, welche zum Messen der Konzentration wenigstens eines Analyts in einer Fluidprobe eingesetzt werden. Dazu erzeugt das Spektrometer einen Lichtstrahl, den es durch die Fluidprobe sendet und an dem anderen Ende der Fluidprobe mittels eines Photosensors erfasst.

Das Spektrometern zugrunde liegende Messverfahren beruht auf dem bekannten physikalischen Phänomen, dass ein Lichtstrahl eine Schwächung (Extinktion) erfährt, wenn er ein Fluid durchdringt. Die Schwächung ist proportional zur Konzentration des Analyts und zur Messstrecke in dem Fluid, welches von dem Lichtstrahl durchdrungen werden muss. Dieser physikalische Zusammenhang wird durch das Lambert-Beersche-Extinktionsgesetz beschrieben.

Als Fluidproben werden dabei mittels des Spektrometers Proben analysiert, die selbst keine eigene Strahlung aufweisen und aussenden.

In der US 7 491 366 B2 ist außerdem eine tragbare Mehrkanal-Vorrichtung beschrieben zur Analyse von Flüssigkeiten. Die Mehrkanal-Vorrichtung weist einen Controller und einen Probenhalter mit einem zylindrischen Probenraum auf, und mindestens zwei optischen Kanäle zum Messen der Trübung der Probenflüssigkeit.

Des Weiteren ist aus der US 2003/058450 A1 ein Gerät zur Prüfung von Flüssigkeitseigenschaften bekannt, welches eine Phiole und ein Gehäuse aufweist. Das Gehäuse weist eine Aussparung zur Aufnahme der Phiole auf. Mehrere Leuchtdioden und photovoltaische Detektoren sind dabei auf mehreren Meridionalebenen innerhalb des Gehäuses angeordnet.

Aufgabe der vorliegenden Erfindung ist es, eine Messvorrichtung bereitzustellen, welche zumindest ein Messen und Analysieren lumineszierenden Proben erlaubt. Vorzugsweise ist es eine Aufgabe der Erfindung eine Messvorrichtung bereitzustellen die sowohl ein Messen und Analysieren lumineszierender Proben erlaubt sowie als Spektrometer einsetzbar ist.

Diese Aufgabe wird durch eine Messvorrichtung gemäß dem Patentanspruch 1 gelöst.

Demgemäß wird eine Messvorrichtung bereitgestellt zum Analysieren einer lumineszierenden Probe und insbesondere Messen der Konzentration wenigstens eines Analyts in einer lumineszierenden Probe, wobei die Messvorrichtung aufweist: ein Gehäuse mit einem Probenaufnahmeraum zum Aufnehmen eines Probenbehälters; einen Probenbehälter zum Aufnehmen der lumineszierenden Probe; wenigstens eine Beleuchtungseinrichtung zum Beleuchten der lumineszierenden Probe, um die lumineszierende Probe zum Nachleuchten anzuregen, eine Strahlungsempfängereinrichtung zum Empfangen der von der lumineszierenden Probe abgegebenen Strahlung; und eine Auswerteeinrichtung zum Auswerten der von der Strahlungsempfängereinrichtung empfangenen Strahlung der lumineszierenden Probe, wobei als lumineszierende Probe eine feste, pastöse, pulverförmige, flüssige und/oder gasförmige lumineszierenden Probe mittels der Messvorrichtung messbar ist, wobei die Messvorrichtung eine Steuerungseinrichtung aufweist, wobei die Messvorrichtung als portable Messvorrichtung mit wenigstens einer eigenen Energiequelle ausgebildet ist, dadurch gekennzeichnet, dass die Messvorrichtung eine Kamera aufweist mittels der Messbedingungen, ein Messort und eine Stelle einer Probenentnahme filmbar oder fotografierbar sind, und eine Kameradaten-Aufzeichnungseinrichtung zum Abspeichern der Kameradaten der Kamera, wobei die Steuerungseinrichtung die Beleuchtungseinrichtung, die Strahlungsempfängereinrichtung, die Kamera und die Kameradaten-Aufzeichnungseinrichtung ansteuert und/oder regelt, und wobei die Messvorrichtung einen Anschluss zum drahtlosen und/oder drahtgebundenen Anschließen einer externen Einrichtung aufweist zum Koppeln mit der externen Einrichtung zur Übertragung der Kameradaten und Messdaten an die externe Einrichtung.

Damit kann eine Messvorrichtung bereitgestellt werden, mittels der lumineszierende Proben, durch Aufnehmen und Auswerten der von der Probe abgegebenen Strahlung, gemessen werden können. Dabei kann die Probe außerdem zusätzlich bestrahlt oder beleuchtet werden, um die Probe zum Nachleuchten anzuregen, wenn die Probe beispielsweise eine photolumineszierende Probe ist.

Die Messvorrichtung hat im Gegensatz zu den mit Bezug auf den Stand der Technik beschriebenen Spektrometern den Vorteil, dass auch lumineszierenden Proben analysiert werden können.

Aus den Unteransprüchen ergeben sich vorteilhafte Ausgestaltungen und Weiterbildungen der vorliegenden Erfindung.

Gemäß der Erfindung weist die Messvorrichtung eine Kamera und eine Kameradaten-Aufzeichnungseinrichtung auf. Die Kamera und/oder die Kameradaten-Aufzeichnungseinrichtung ist dabei z.B. an dem Basisteil und/oder dem Messkopf vorgesehen. Mittels der Kamera kann dabei beispielsweise der Ort an dem die lumineszierende Probe entnommen wird gefilmt werden.

Gemäß einer Ausführungsform der Erfindung weist die Messvorrichtung wenigstens ein Mikrophon und beispielsweise eine Mikrophon-Aufzeichnungseinrichtung auf. Das wenigstens eine Mikrophon und/oder die Mikrophon Aufzeichnungseinrichtung sind dabei z.B. an dem Basisteil und/oder dem Messkopf vorgesehen. Dadurch kann ein Benutzer der Messvorrichtung diese als Diktiergerät nutzen und beispielsweise Information welche die Messung und Analyse der jeweilige Probe betreffen diktieren bzw. aufzeichnen. Dadurch kann auf handschriftliche Aufzeichnungen verzichtet werden und die Handlichkeit der Messvorrichtung zusätzlich erhöht werden.

In einer anderen Ausführungsform der Erfindung weist die Messvorrichtung eine Speichereinrichtung zum Speichern von Messdaten des Messkopfs auf. Dies hat den Vorteil, dass die Messdaten des zum Analysieren einer lumineszierenden Probe ausgebildeten Messkopfes bequem gespeichert und anschließend z.B. an einem Rechner im Labor ausgelesen werden können.

In einer weiteren Ausführungsform der Erfindung weist die Messvorrichtung eine Anzeigevorrichtung auf. Die Anzeigevorrichtung ist dabei z.B. an dem Basisteil und/oder dem Messkopf vorgesehen ist. Auf diese Weise können Informationen, wie z.B. Messwerte, ein Menü beispielsweise zum Auswählen einer durchzuführenden Messung usw. auf der Anzeigeeinrichtung angezeigt werden. Die Anzeigeeinrichtung kann dabei wahlweise zusätzlich als berührungsempfindliches Touchpad oder Touchscreen ausgebildet sein, zum Betätigen des Menüs usw..

Gemäß der Erfindung weist die Messvorrichtung wenigstens einen Anschluss auf zum drahtlosen und/oder drahtgebundenen Anschließen einer externen Einrichtung. Der Anschluss ist dabei beispielsweise ein USB-Anschluss, ein Kabelanschluss, ein Bluetooth-Anschluss, ein Satellitenanschluss oder ein Funk-Anschluss usw.. Ein drahtloser Anschluss hat den Vorteil, dass die Messvorrichtung ähnlich einem Handy oder Smartphone Informationen, z.B. Messdaten, Fotos, Diktate usw., bequem drahtlos übertragen kann. Die Messvorrichtung kann dabei auch mit einem Satellitenanschluss vergleichbar einem Satellitentelefon ausgebildet sein zum Übertragen von Informationen wie z.B. Messdaten, Fotos, Diktate usw. über eine Satelliten.

In einer Ausführungsform der Erfindung ist das Basisteil und der Messkopf zusammensteckbar ausgebildet. Das Basisteil und der Messkopf weisen dabei eine elektrische Schnittstelle auf zum elektrischen Verbinden des Messkopfs und des Basisteils.

Gemäß einem alternativen Beispiel, welches nicht unter die Erfindung fällt, wird ein Spektrometer-Messkopf verwendet, der ausgebildet ist, eine Fluidprobe zu analysieren. Ein solcher Messkopf kann dazu eingesetzt werden, beispielsweise eine Probe eines Gewässers oder Brunnens zu untersuchen.

In der vorliegenden Erfindung ist wenigstens eine Beleuchtungseinrichtung vorgesehen zum Beleuchten der lumineszierenden Probe. Dies hat den Vorteil, dass insbesondere photolumineszierende Proben, wie z.B. fluoreszierende oder phosphorisierende Proben analysiert werden können, da sie mittels der Beleuchtungseinrichtung zum Nachleuchten angeregt werden.

Gemäß der vorliegenden Erfindung weist die Messvorrichtung eine Steuerungseinrichtung auf zum Steuern und/oder Regeln der Beleuchtungseinrichtung. Dabei beispielswiese die Beleuchtungsdauer, die Beleuchtungsstärke und/oder das Beleuchtungsintervall der Beleuchtungseinrichtung durch die Steuerungseinrichtung gesteuert und/oder geregelt werden. Dies hat den Vorteil, dass die Beleuchtung gezielt an eine jeweilige lumineszierenden Probe durch die Steuerungseinrichtung angepasst und dadurch die Analyse der Probe weiter verbessert werden kann.

In einer Ausführungsform der vorliegenden Erfindung weist die Messvorrichtung eine Anzeigeeinrichtung auf zum Anzeigen eines Ergebnisses der Auswertung der Auswertungseinrichtung. Dadurch kann ein Benutzer der Messvorrichtung sofort das Ergebnis der Analyse entnehmen, ohne die Messvorrichtung an eine externe Anzeigeeinrichtung anschließen zu müssen.

In einer weiteren Ausführungsform der vorliegenden Erfindung sind wenigstens zwei Beleuchtungseinrichtungen vorgesehen. Die Beleuchtungseinrichtungen können hierbei durch die Steuerungseinrichtung einzeln und/oder zusammen angesteuert werden. Das Vorsehen von mehreren Beleuchtungseinrichtungen hat den Vorteil, dass die Probe beispielsweise von mehreren Richtungen beleuchtet und/oder beispielsweise mit verschiedenen Beleuchtungsarten beleuchtet werden kann. Beispielweise können die Beleuchtungseinrichtungen Licht mit einer unterschiedlichen Wellenlänge abstrahlen, so dass beispielsweise verschiedene in dem Probe vorhandene Analyte analysiert werden können.

Gemäß einer Ausführungsform der vorliegenden Erfindung ist die Gehäuseöffnung mittels eines Deckelelements verschließbar ausgebildet. Die Gehäuseöffnung ist dabei mittels der Deckelelements z.B. zumindest lichtdicht verschließbar. Dadurch kann verhindert werden, dass ungewollte Strahlung von außen in das Gehäuse eindringen und das Analysieren der Probe beeinträchtigen kann.

In einer weiteren Ausführungsform der vorliegenden Erfindung ist der Probenaufnahmeraum lichtdicht nach außen abgeschirmt ausgebildet. Dies hat den Vorteil, dass Strahlung bzw. Licht von Elektronikbauteilen, sofern in dem Gehäuse des Messvorrichtung vorhanden, ungewollt in den Probenaufnahmeraum gelangen und das Analysieren der Probe beeinträchtigen kann. Des Weiteren kann sichergestellt werden, dass eine Probe in dem Probenaufnahmeraum nur durch die zugeordnete jeweilige Beleuchtungseinrichtung beleuchtet wird und nicht z.B. durch andere in dem Gehäuse vorhandene Elektronikbauteile.

In einer anderen Ausführungsform der vorliegenden Erfindung ist der Probenbehälter fest oder lösbar in dem Probenbehälterraum angeordnet und mittels eines Deckels verschließbar ausgebildet. Ein lösbarer Probenbehälter hat den Vorteil, dass er zum Aufnehmen der lumineszierenden Probe, beispielsweise einer lumineszierenden Gewässerprobe, aus dem Probenbehälterraum des Gehäuses entnommen werden kann. Ebenso kann ein fest mit dem Gehäuse verbundener Probenbehälter einfach z.B. über eine Einrichtung, wie eine Pipette, mit einer lumineszierenden Probe versehen werden.

In einer weiteren Ausführungsform der vorliegenden Erfindung weist die Strahlungsempfängereinrichtung wenigstens einen Lichtsensor und/oder einen Photosensor auf. Im Falle von mehreren Lichtsensoren oder Photosensoren können diese ein Array bilden.

Gemäß der vorliegenden Erfindung ist die Messvorrichtung als portable Messvorrichtung mit wenigstens einer eigenen Energiequelle ausgebildet. Die Energiequelle kann hierbei wenigstens eine Batterie oder ein Akku sein. Dadurch kann die Messvorrichtung überall eingesetzt werden und insbesondere auch dort, wo kein Stromanschluss vorhanden ist.

In einer Ausführungsform der vorliegenden Erfindung weist die Messvorrichtung ein Stromkabel zum Anschließen an eine Steckdose oder einen Stromkabelanschluss auf zum Anschließen eines Stromkabels.

In der vorliegenden Erfindung ist als lumineszierende Probe eine gasförmige, feste und/oder flüssige lumineszierenden Probe mittels der Messvorrichtung messbar. Die lumineszierende Probe kann außerdem sowohl pastös wie auch pulverförmig sein. Ebenso können Organismen, Zellen und Tiere, wie beispielsweise Insekten, sofern sie lumineszierend sind, mittels der Messvorrichtung analysiert werden.

Die Erfindung wird nachfolgend anhand von Ausführungsbeispielen unter Bezugnahme auf die beiliegenden Figuren der Zeichnung näher erläutert.

Es zeigen:
- Fig. 1: eine Perspektivansicht einer Messvorrichtung gemäß einer Ausführungsform der Erfindung, wobei ein Basisteil mit einem Messkopf zum Messen von lumineszierenden Proben verbunden ist;
- Fig. 2: ein Foto einer Messvorrichtung gemäß Fig. 1;
- Fig. 3: eine Draufsicht der Messvorrichtung gemäß Fig. 1;
- Fig. 4: eine Perspektivansicht der Messvorrichtung gemäß Fig. 1, wobei eine Verschlussklappe in der geschlossenen Position ist;
- Fig. 5: ein weiteres Foto der Messvorrichtung gemäß Fig. 1;
- Fig. 6: noch ein weiteres Foto der Messvorrichtung gemäß Fig. 1, wobei der Messkopf von dem Basisteil abgenommen ist;
- Fig. 7: eine Perspektivansicht des Messkopfs der Messvorrichtung gemäß Fig. 1;
- Fig. 8: eine Seitenansicht der Messvorrichtung gemäß Fig. 1, wobei die Verschlussklappe in der geschlossenen Position ist;
- Fig. 9: eine Draufsicht auf die Messvorrichtung gemäß Fig. 1, wobei die Verschlussklappe in der geschlossenen Position ist;
- Fig. 10: eine Unteransicht der Messvorrichtung gemäß Fig. 1;
- Fig. 11: eine Rückansicht der Messvorrichtung gemäß Fig. 1, wobei ein USB-Stick in einem USB-Anschluss der Messvorrichtung aufgenommen ist;
- Fig. 12: eine Vorderansicht der Messkopfvorrichtung gemäß Fig. 1;
- Fig. 13: ein Foto einer Messvorrichtung gemäß Fig. 1, wobei ein andere Messkopf mit dem Basisteil verbunden ist, wobei der Messkopf ein Spektrometer-Messkopf zum Messen einer Fluidprobe ist;
- Fig. 14: ein Foto der Messvorrichtung gemäß Fig. 13, wobei der Spektrometer-Messkopf von dem Basisteil entfernt ist; und
- Fig. 15: eine Messvorrichtung gemäß einem weiteren Ausführungsbeispiel der vorliegenden Erfindung, wobei bei der Messvorrichtung ein Teil des Gehäuses entfernt ist;
- Fig. 16: die Messvorrichtung gemäß Fig. 15 und ihr Gehäuse.

In den Figuren bezeichnen gleiche Bezugsziffern gleiche oder funktionsgleiche Komponenten, soweit nichts Gegenteiliges angegeben ist.

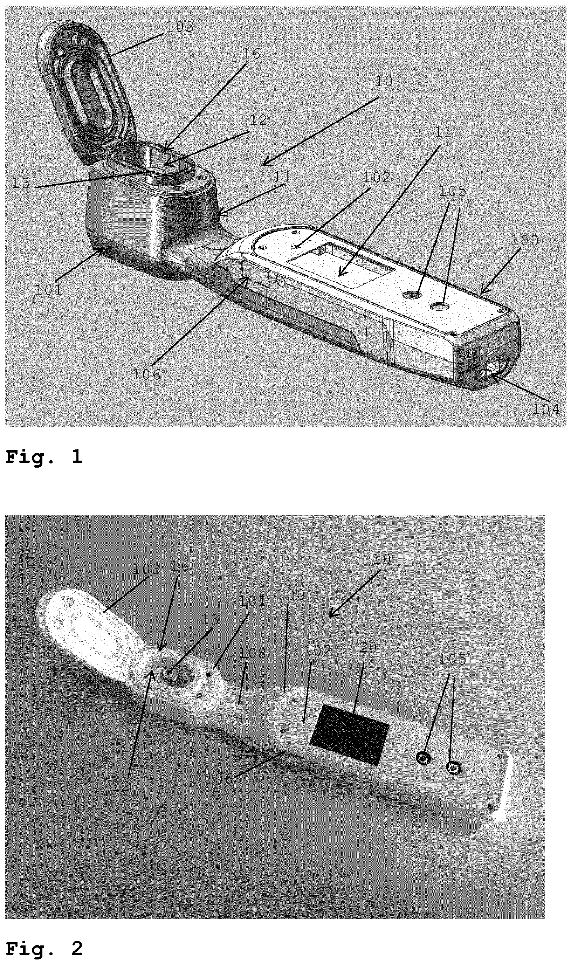

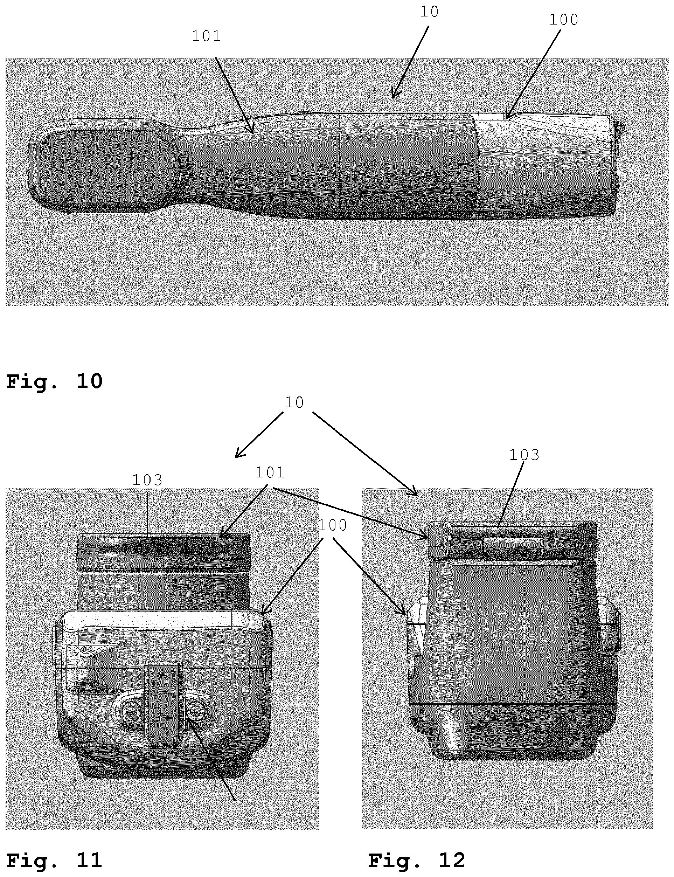

Die Fig. 1 bis 12 zeigen eine Messvorrichtung 10 gemäß einem Ausführungsbeispiel der vorliegenden Erfindung, wobei die Messvorrichtung 10 ein Gehäuse 11 bestehend aus einem Basisteil 100 und einem Messkopf 101 aufweist, der auswechselbar an dem Basisteil 100 angeordnet ist. In dem in den Fig. 1 bis 12 gezeigten Ausführungsbeispiel ist als Messkopf 101 ein Messkopf zum Messen von lumineszierenden Proben in dem Basisteil 100 eingesetzt.

Lumineszenz ist die optische Strahlung eines physikalischen Systems, die beim Übergang von einem angeregten Zustand zum Grundzustand entsteht. Ursache ist hierbei strahlende Desaktivierung.

Je nach Art der Anregung unterscheidet man verschiedene Arten der Lumineszenz, darunter beispielsweise die sog. Photolumineszenz, die sog. Chemolumineszenz und die sog. Biolumineszenz.

Bei der Photolumineszenz erfolgt eine Anregung des Systems durch Photonen. Dabei unterscheidet man je nach Zeitdauer zwischen Anregung und Emission des Lichtes zwischen Phosphoreszenz und Fluoreszenz. Fluoreszenz ist die spontane Emission von Licht kurz nach der Anregung eines Materials. Phosphoreszenz ist wiederum die Eigenschaft eines Stoffes, nach einem Beleuchten mit Licht, beispielsweise mit sichtbarem Licht oder UV-Licht, im Dunkeln nachzuleuchten. Ursache ist strahlende Desaktivierung.

Bei der Chemolumineszenz erfolgt die Anregung des Systems durch eine chemische Reaktion. Beispielsweise kann hierbei Luminol zum Nachweis von Blut eingesetzt werden.

Bei der Biolumineszenz erfolgt die Anregung des Systems durch eine chemische Reaktion in einem lebenden Organismus, beispielsweise einer Zellen, einem Bakterium oder einem Tier, wie z.B. einem Leuchtkäfer, in welchem Luciferin oxidiert wird.

Der Messkopf 101 zum Analysieren einer lumineszierenden Probe, weist einen Probenaufnahmeraum 12 auf, in welchen ein Probenbehälter 13 mit der lumineszierenden Probe einbringbar und analysierbar ist. Der Probenbehälter 13 ist dabei beispielsweise mittels eines Deckels verschließbar, insbesondere dicht verschließbar, so dass die Probe nicht ungewollt aus dem Probenbehälter 13 entweichen kann.

Der Probenbehälter 13 ist hierbei transparent, beispielsweise aus einem transparenten Kunststoff oder einem transparenten Glas, zum Hindurchlassen der von der lumineszierenden Probe abgegebenen Strahlung, z.B. sichtbares Licht, und gegebenenfalls zum Hindurchlassen von Strahlung wenigstens einer zusätzlichen Beleuchtungseinrichtung zum Beleuchten der lumineszierenden Probe, um diese zum Nachleuchten anzuregen.

Der Probenbehälter 13 kann dabei fest oder lösbar in dem Messkopf integriert sein. Ist der Probenbehälter 13, z.B. eine Glasviole, lösbar in dem Messkopf 101 integriert, so kann er leicht aus dem Messkopf 101 durch eine entsprechende Gehäuseöffnung 16 des Messkopfs entnommen, mit der lumineszierenden Probe gefüllt und anschließend in den Messkopf 101 eingesetzt werden. In dem Fall, dass der Probenbehälter 13 fest in dem Messkopf 101 integriert ist, kann der Deckel zum Befüllen des Probenbehälters 13 entfernt und nach dem Befüllen des Probenbehälters 13 diesen wieder verschließen. Der Deckel kann ebenfalls wie der Probenbehälter transparent ausgebildet sein.

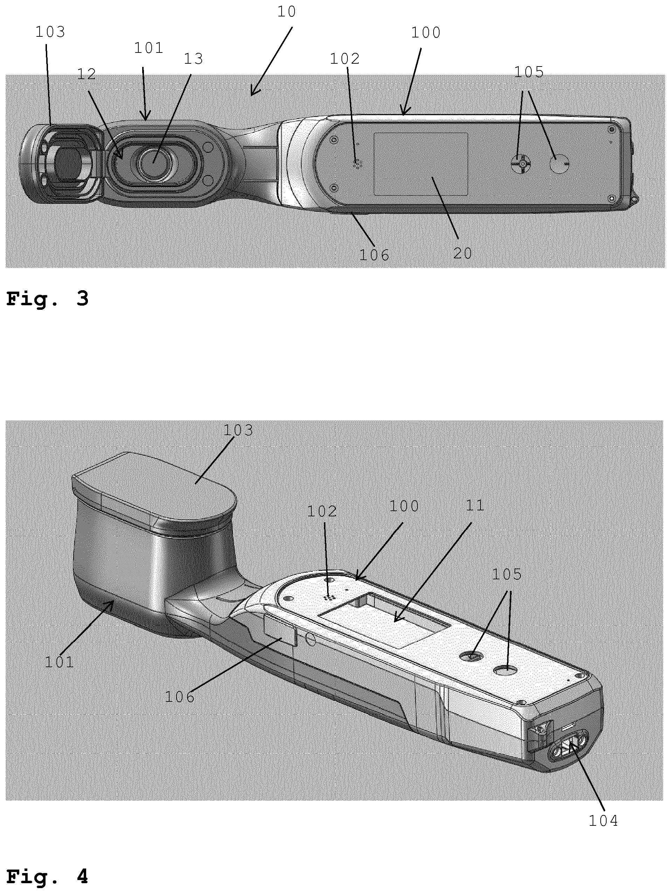

Die Gehäuseöffnung 16 des Messkopfs zum Einsetzen und/oder Befüllen des Probenbehälters 13 ist mit einem Deckelelement, z.B. einer Verschlussklappe 103 oder einer nicht dargestellten Verschlusskappe, verschließbar ausgebildet, insbesondere lichtdicht verschließbar ausgebildet. Die Verschlussklappe 103 ist dabei schwenkbar an dem Gehäuse des Messkopfs 101 befestigt, wie in den Fig. 1-12 gezeigt ist. Dabei kann die Verschlussklappe 103 zwischen einer geöffneten Stellung, wie in den Fig. 1, 2, 3 und 7 gezeigt, in welcher der Probenaufnahmeraum 12 zugänglich ist, und einer geschlossen Stellung, wie in Fig. 4, 5, 6 und 8-12 gezeigt ist, in welcher der Probenaufnahmeraum 12 geschlossen ist, geschwenkt werden.

Auf diese Weise kann sichergestellt werden, dass kein Licht von außen in den Messkopf und dessen Probenaufnahmeraum 12 eindringen und das Messergebnis verfälschen kann.

In dem Probenaufnahmeraum 12 des Messkopfs, ist des Weiteren beispielsweise wenigstens eine Strahlungsempfängereinrichtung vorgesehen, zum Empfangen der von der lumineszierenden Probe abgegebenen Strahlung und Umwandeln in elektrische Signale. Als Strahlungsempfängereinrichtung zum Empfangen von Strahlung, wie z.B. Licht usw., der lumineszierenden Probe kann beispielsweise ein Lichtsensor, Photomultiplier, Avalanche-Dioden oder Photosensor eingesetzt werden. Der Photosensor kann hierbei wenigstens eine Photodiode aufweisen. Statt eines Lichtsensors, Photomultiplier, Avalanche-Dioden oder Photosensors, kann auch jede andere geeignete Strahlungsempfängereinrichtung oder Kombination von Strahlungsempfängereinrichtungen vorgesehen werden, die zum Empfangen der von einer lumineszierenden Probe abgegeben Strahlung, wie z.B. Licht usw., geeignet ist.

Des Weiteren ist zum Analysieren einer photolumineszierenden Probe als einem Beispiel für eine lumineszierende Probe, in dem Messkopf 101 die wenigstens eine Beleuchtungseinrichtung vorgesehen. Mittels der Beleuchtungseinrichtung wird die lumineszierenden Probe mit einer geeigneten Strahlung beleuchtet, um die lumineszierende Probe zum Nachleuchten anzuregen. Derartig lumineszierende oder photolumineszierende Proben sind beispielsweise fluoreszierende Proben oder phosphorisierende Proben. Die Beleuchtungseinrichtung ist dabei ebenfalls z.B. im Probenaufnahmeraum 12 angeordnet.

Beispielsweise können mehrere Beleuchtungseinrichtung vorgesehen werden, wobei die Beleuchtungseinrichtungen alle Licht derselben Wellenlänge oder Licht unterschiedlicher Wellenlänge abstrahlen zum Beleuchten der lumineszierenden Probe. Dadurch kann eine zu untersuchenden lumineszierenden Probe, beispielsweise abwechselnd, mit Licht einer unterschiedlichen Wellenlänge beleuchtet werden, um z.B. mehrere oder verschiedene Analyte zu bestimmen.

Die Strahlungsempfängereinrichtung ist mit einer Auswerteeinrichtung verbunden zum Auswerten der Signale der Strahlungsempfängereinrichtung zum Analysieren der lumineszierenden Probe.

Die Auswerteeinrichtung kann dabei Teil der Messvorrichtung 10 und in dem Basisteil 100 und/oder dem Messkopf 101 vorgesehen sein. Die Messvorrichtung 10 ist mit einer externen Auswerteeinrichtung koppelbar und weist einen Anschluss, wie den in Fig. 1, 4 und 11 gezeigten USB-Anschluss 104, einen Strom- oder Netzkabelanschluss und/oder einen drahtlosen Anschluss, z.B. einen Bluetooth-Anschluss, Funk-Anschluss, eine Satellitenanschluss vergleichbar einem Satellitentelefon usw. auf. Die Erfindung ist auf die genannten Anschlüsse zum Anschließen einer externen Einrichtung, z.B. einer externen Auswerteeinrichtung, nicht beschränkt. Die externe Einrichtung, insbesondere die externe Auswerteeinrichtung, kann dabei ein PC, ein Laptop, ein Smartphone, ein Tablet-PC usw. sein, wobei diese Aufzählung lediglich beispielhaft und nicht abschließend ist. Beispielsweise kann eine Auswertesoftware zum Auswerten der Daten der Messvorrichtung als App vorgesehen sein und z.B. auf ein Smartphone oder einen Tablet-PC ladbar sein.

Die Messvorrichtung 10 weist wahlweise zusätzlich eine Speichereinrichtung auf zum Speichern von Daten der Messvorrichtung 10, beispielsweise den Daten der Strahlungsempfängereinrichtung usw..

Des Weiteren ist eine Anzeigeeinrichtung 20 vorgesehen zum Anzeigen beispielsweise des Ergebnisses der Auswertung der Auswerteeinrichtung und/oder zum Anzeigen wenigstens eines Menüs usw.. Ein Anzeigen der Ergebnisse der Auswerteeinrichtung und/oder wenigstens eines Menüs kann zusätzlich oder alternativ auch auf einer an die Messvorrichtung 10 angeschlossenen externen Einrichtung erfolgen. Wie zuvor beschrieben, kann die externe Einrichtung dabei beispielsweise ein Tablet-PC, ein Smartphone, ein PC, ein Laptop sein, welche jeweils eigene Displays aufweisen und des Weiteren selbst als Auswerteeinrichtung und/oder Speichereinrichtung, die Daten der Messvorrichtung 10 speichern und/oder auswerten und auf dem eigenen Display und/oder der Anzeigeeinrichtung 20 der Messvorrichtung 10 anzeigen.

Die Anzeigeeinrichtung 20 der Messvorrichtung 10 ist beispielsweise auf dem Basisteil vorgesehen, wie in den Fig. 1, -5 und 9 gezeigt ist. In den Fig. 1 und 4 ist lediglich die Öffnung in dem Gehäuse 11 für die Anzeigeeinrichtung gezeigt. Zur Navigation zwischen verschiedenen Menüs oder zum Anzeigen verschiedener Ergebnisse der Auswertung der Auswerteeinrichtung 20 kann die Messvorrichtung 10 eine Tastensteuerung aufweisen, wie in Fig. 1-5 und 9 gezeigt ist. Die Tastensteuerung weist dabei z.B. wenigstens eine oder zwei Tasten 105 auf. Ebenso kann die Anzeigeeinrichtung 20 auch zusätzlich oder alternativ als Touchscreen ausgebildet sein usw..

Des Weiteren ist zusätzlich eine Steuerungseinrichtung in dem Messkopf 101 und/oder dem Basisteil 100 der Messvorrichtung 10 vorgesehen, zum Steuern und/oder Regeln z.B. der Beleuchtung der jeweiligen Beleuchtungseinrichtung des Messkopfs 101. Beispielsweise kann die Steuerungseinrichtung die Beleuchtungsdauer, die Beleuchtungsstärke, das Beleuchtungsintervall der Beleuchtungseinrichtung steuern und/oder regeln usw.. Mittels der Steuerungseinrichtung können des Weiteren auch mehrere Beleuchtungseinrichtungen gemeinsam oder unabhängig voneinander angesteuert werden zum Analysieren einer lumineszierenden Probe in dem Probenaufnahmeraum 12 der Messvorrichtung 10.

Wie in Fig. 1 - 5 und 9 gezeigt ist, weist die Messvorrichtung zusätzlich eine Mikrophon-Einrichtung mit wenigstens einem Mikrophon 102, sowie eine Mikrophon-Aufzeichnungseinrichtung auf, zum Aufzeichnen der in das Mikrophon 102 gesprochenen Inhalte. Die Mikrophon-Aufzeichnungseinrichtung kann dabei Teil der Messvorrichtung 10 sein und/oder die in das Mikrophone 102 gesprochenen Inhalte können drahtlos und/oder drahtgebunden von der Messvorrichtung 10 auf eine externe Einrichtung, wie ein Smartphone, einen Server, ein Laptop, einen PC, einen Tablet-PC usw. übertragen werden.

Mittels des Mikrophons 102 kann auf diese Weise beispielsweise ein Benutzer sehr bequem vor Ort bei einer Messung beispielsweise Informationen wie die Messbedingungen, den Messort usw. in die Messvorrichtung 10 diktieren. Dies erhöht den Handhabungskomfort der Messvorrichtung 10. Anschließend kann die in der Aufzeichnungsvorrichtung aufgezeichnete Information problemlos durch die Messvorrichtung 10 abgehört und/oder beispielsweise an eine externe Einrichtung, wie das zuvor beschriebene Smartphone, den Tablet-PC, den PC, das Laptop usw., drahtlos oder drahtgebunden übertragen und wahlweise zusätzlich dort abgehört werden. Eine drahtlose oder drahtgebundene Übertragung kann, wie zuvor beschrieben, mittels des Anschlusses, z.B. in Form eines Bluetooth-Anschlusses oder USB-Anschlusses 104 usw. erfolgen.

Weiter weist die Messvorrichtung 10 eine Kamera 106 auf, welche in dem Messkopf 101 oder dem Basisteil 100, wie in den Fig. 1 2, 4-6, 8 und 9 gezeigt, angeordnet ist. In dem in Fig. 1, 2, 4-6, 8 und 9 gezeigten Ausführungsbeispiel, ist die Kamera 106 in dem Basisteil 100 vorgesehen und z.B. seitlich an dem Basisteil 100 angeordnet. Mittels der Kamera 106 können z.B. die Messbedingungen, der Messort, die Stelle einer Probenentnahme gefilmt und in einer Kameradaten-Aufzeichnungseinrichtung abgespeichert werden. Die Kameradaten-Aufzeichnungseinrichtung ist dabei Teil der Messvorrichtung 10 und die Kameradaten können drahtlos und/oder drahtgebunden von der Messvorrichtung 10 auf eine externe Einrichtung, wie ein Smartphone, einen Server, ein Laptop, einen PC, einen Tablet-PC usw. übertragen werden.

Im Falle des in den Fig. 1-12 mit dem Basisteil verbundenen Messkopfs kann die zuvor beschriebene Steuerungseinrichtung beispielsweise wenigstens die Beleuchtungseinrichtung, die Strahlungsempfängereinrichtung, die Anzeigeeinrichtung 20, die Kamera, die Mikrophon-Einrichtung, die Speichereinrichtung, die Kameradaten-Aufzeichnungseinrichtung, die Mikrophone-Aufzeichnungseinrichtung und/oder die Auswerteeinrichtung ansteuern und/oder regeln. Ebenso kann die Messvorrichtung 10 über ihren Anschluss auch drahtlos oder drahtgebunden zusätzlich oder alternativ an eine externe Steuerungseinrichtung angeschlossen werden.

Der Probenaufnahmeraum 12 kann außerdem in dem Messkopf 101 der Messvorrichtung 10 zusätzlich lichtdicht verschließbar oder von Umgebungslicht abgeschirmt ausgebildet sein, so dass außer Licht einer gegebenenfalls zusätzlich vorhandenen Beleuchtungseinrichtung zum gezielten Beleuchten der lumineszierenden Probe in dem Probenaufnahmeraum 12 kein Licht von außerhalb des Messkopfs der Messvorrichtung 10 oder auch, sofern vorhanden, von Lichtquellen innerhalb des Messkopfs 101 ungewollt in den Probenaufnahmeraum 12 und in die dort enthaltene Probe eindringen kann.

Wie zuvor beschrieben und in den Fig. 1-5 und 9 gezeigt, weist die Messvorrichtung 10 eine Display als Anzeigeeinrichtung 20 auf zum Anzeigen z.B. des Ergebnisses der Analyse der in dem Probenbehälter enthaltenen Probe. Die Messvorrichtung 10 ist als portable Messvorrichtung 10 ausgebildet und weist eine eigene Energiequelle auf, zum Speisen von Einrichtungen, wie z.B. der Steuerungseinrichtung, der Auswerteeinrichtung, der Anzeigeeinrichtung 20, der Beleuchtungseinrichtung, der Strahlungsempfängereinrichtung, der Kamera 106 und/oder der Mikrophon-Einrichtung 102 usw. mit Energie. Die Energiequelle ist dabei beispielsweise eine Batterieeinrichtung und/oder ein Akku. Zusätzlich kann die Messvorrichtung 10 auch den zuvor beschriebenen Anschluss, wie z.B. einen USB-Anschluss 104 und/oder einen Kabel- oder Netzanschluss zum Anschließen eines Stromkabels oder ein Stromkabel zum Anschließen an eine Steckdose aufweisen usw., um die Messvorrichtung 10 mit Energie zu versorgen.

Die zuvor beschriebene Kameradaten-Aufzeichnungseinrichtung, die Speichereinrichtung zum Speichern insbesondere von Messdaten und/oder die Mikrophon-Aufzeichnungseinrichtung können als eine Speichereinrichtung oder als jeweils eigene Speichereinrichtung in der Messvorrichtung 10 vorgesehen sein. Zusätzlich oder alternativ können die Informationen der Kameradaten-Aufzeichnungseinrichtung, der Speichereinrichtung und/oder der Mikrophon-Aufzeichnungseinrichtung auch ohne Zwischenspeicherung in der Messvorrichtung 10 oder zusätzlich zu einer Zwischenspeicherung in der Messvorrichtung 10 direkt an eine externe Einrichtung über den Anschluss, insbesondere USB-Anschluss 104, Funk-Anschluss oder Bluetooth-Anschluss, übertragen werden. Die externe Einrichtung ist dabei wie zuvor beschrieben z.B. ein Smartphone, ein Laptop, ein PC, ein Tablet-PC usw.

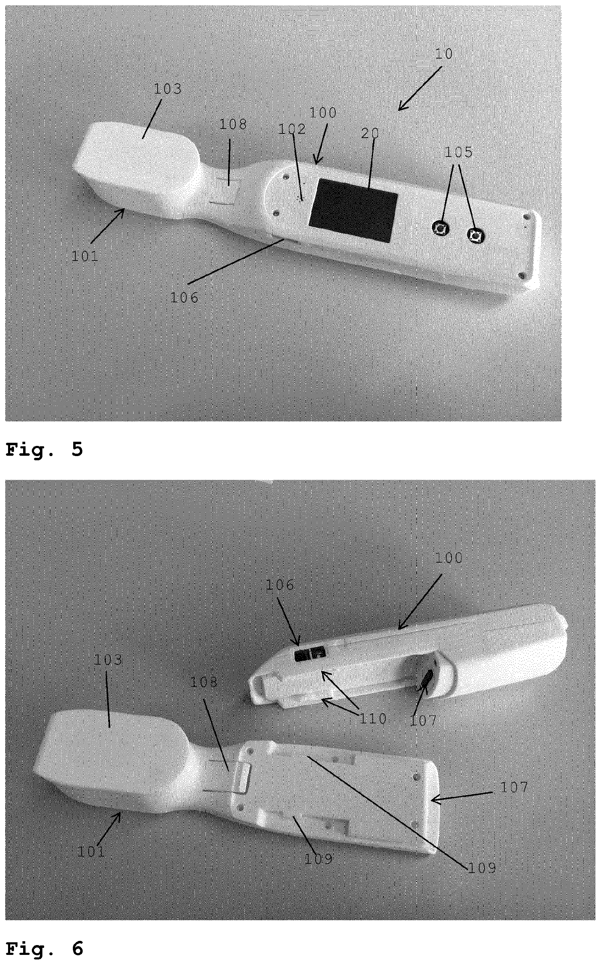

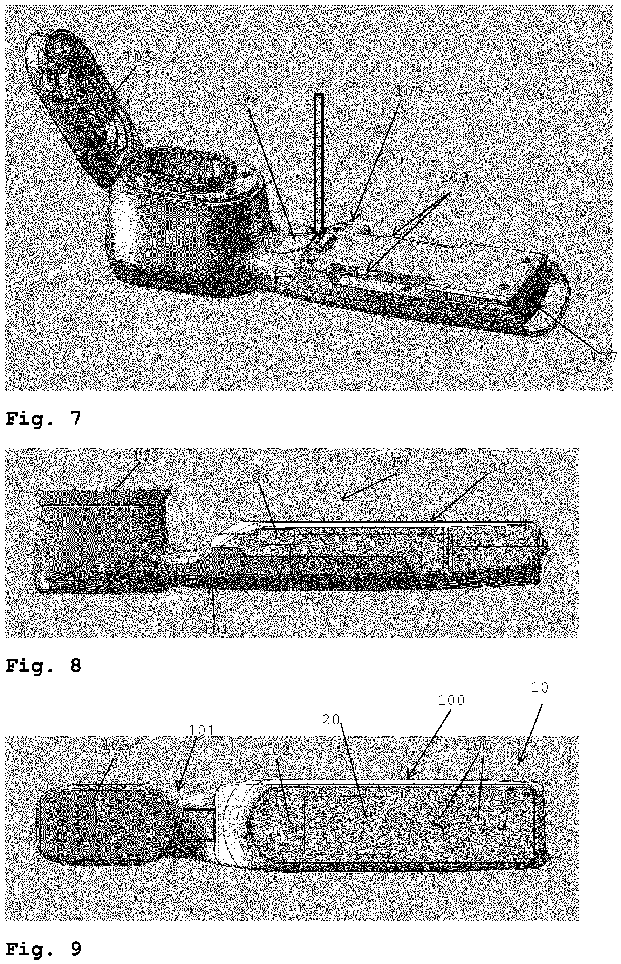

Wie in Fig. 6 und 7 gezeigt, ist der Messkopf 101 auswechselbar an dem Basisteil 100 angeordnet. Der Messkopf 101 ist dabei beispielweise mit dem Basisteil 100 zusammensteckbar ausgebildet. Dabei ist eine elektrische Schnittstelle 107, z.B. elektrische Steckverbindung an dem Basisteil 100 und dem Messkopf 101 vorgesehen, zum elektrischen Verbinden des Basisteils 100 mit dem Messkopf 101. Wahlweise zusätzlich kann der Messkopf 101 ein Rastelement 108 aufweisen, mit welchem der Messkopf 101 zusätzlich an dem Basisteil 100 einrasten kann. Die Verrastung kann dabei gelöst werden, durch Drücken des Rastelements 108, wie in Fig. 7 mit einem Pfeil angedeutet ist. Wahlweise zusätzlich weist der Messkopf 101 Haltenasen 109 auf, welche in entsprechenden Aufnahme 110 des Basisteils aufnehmbar sind, wenn der Messkopf und das Basisteil 100 zusammengesteckt werden zum Fixieren des Messkopfs 101 an dem Basisteil 100.

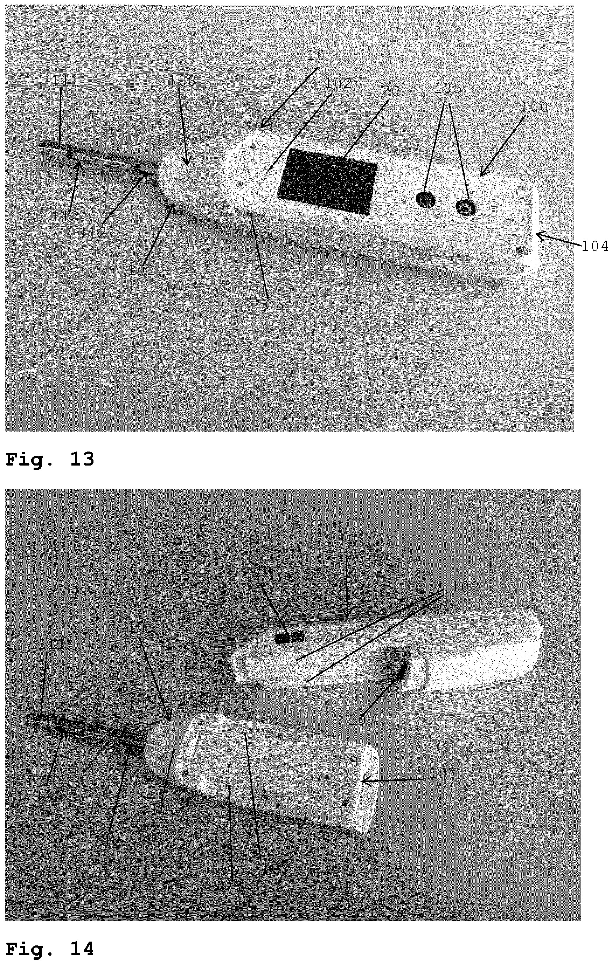

In den Fig. 13 und 14 ist das zuvor mit Bezug auf die Fig. 1-12 beschriebene Basisteil 100 der Messvorrichtung 10 mit einem anderen Messkopf 101 bestückt. Statt dem in den Fig. 1-12 eingesetzten Messkopf zum Messen von lumineszierenden Proben ist in dem Beispiel in Fig. 13 und 14 ein Spektrometer-Messkopf 101 eingesetzt. Die Fig. 13 und 14 zeigen Merkmale der Erfindung, aber keine Ausführungsform der Erfindung, wie beansprucht.

Der Spektrometer-Messkopf 101 dient zum Messen der Konzentration wenigstens eines Analyts in einer Fluidprobe.

Bei der Fluidprobe kann es sich um ein Gas, eine Flüssigkeit oder ein Gemisch daraus handeln. Die Fluidprobe kann außerdem auch einen gewissen Feststoffanteil enthalten, beispielsweise Staub.

Bei dem Analyt handelt es sich vorzugsweise um einen bevorzugt in Wasser gelösten Inhaltsstoff. Beispiele für derartige Inhaltsstoffe sind Sauerstoff, Ozon, Chlor (freies Chlor, Gesamtchlor), Stickstoffverbindungen (Gesamtstickstoff), Magnesium, Calzium, Kupfer, Kalium, Eisen, Zink, Schwermetalle, Ammonium, Cyanursäure, Cyanid, Harnstoff, Carbonat (Wasserhärte), Wasserstoffperoxid, Chlorid, Nitrit, Nitrat oder Phosphat. Genauso kann es sich bei der Fluidprobe aber auch um ein Gas, insbesondere Luft handeln. Mittels des Spektrometers- Messkopfs 101 kann beispielsweise die Konzentration von Kohlenmonoxid, Kohlendioxid, Wasseranteile, Alkohole, Trübungen, Stäuben in der Luft gemessen werden. Beispielsweise kann es sich bei den Fluidproben auch um Bodenproben oder Düngemitteln handeln. Auch die Messung eines pH-Werts in der Fluidprobe mittels des Spektrometer-Messkopf 101 ist möglich.

Der Spektrometer-Messkopf 101 weist ein oder mehrere Lichtquellen auf, beispielsweise LEDs, insbesondere Laser-LEDs. Die eine oder mehreren Lichtquellen erzeugen einen Lichtstrahl.

Der Spektrometer-Messkopf 101 weist weiterhin einen Photosensor auf zum Empfangen des Lichtstrahls. Der Photosensor wandelt den auftreffenden Lichtstrahl in elektrische Signale um.

Ferner ist der Spektrometer-Messkopf 101 mit einer Messstrecke im Strahlengang des Lichtstrahls ausgebildet. Der Spektrometer-Messkopf 101 mit seiner Messstrecke ist in die Fluidprobe einbringbar. Die Messstrecke ist veränderlich vorgesehen und kann vergrößert und verkleinert werden. Das Prinzip ist der veränderlichen Messstrecke bei einem Spektrometer ist außerdem in der WO2010/146110 A1 der IFE GmbH sowie in der DE 10 2009 025 261 der IFE GmbH beschrieben.

Dazu ist der Spektrometer-Messkopf 101 beispielsweise wie folgt ausgebildet:
In dem Strahlengang des Lichtstrahls ist ein Lichtleiter, z.B. ein Acrylstab, Macrolonstab, Glasstab oder Glasfaserkabel, angeordnet. Der Lichtleiter weist einen ersten Abschnitt auf, welcher fest in dem Spektrometer-Messkopf 101 untergebracht ist und einen zweiten Abschnitt auf, welcher sich aus dem Spektrometer-Messkopf 101 heraus in eine Hülse 111 erstreckt.

Die Hülse 111 ist, wie in Fig. 13 und 14 mit mehreren Langlöchern 112 versehen. Unabhängig von der Stellung der Hülse 111 in Bezug auf den Spektrometer-Messkopf 101 bzw. den Lichtleiter steht immer eines der Langlöcher 112 in Verbindung mit der Messstrecke, das heißt, dass die Fluidprobe aus dem Fluid, beispielsweise einem Gewässer, entnommen werden kann. Eine derartige Probenentnahme kann gemäß dem vorliegenden Ausführungsbeispiel einfach durch Eintauchen der Langlöcher 112, damit also auch Eintauchen der Hülse 111 samt dem Endstück, in das Fluid vorgenommen werden.

Die Hülse 111 weist einen ersten Abschnitt auf, mit welchem sie sich in den Spektrometer-Messkopf 101 erstreckt. Der Abschnitt ist entlang des Strahlengangs des Lichtstrahls in dem Spektrometer-Messkopf 101 in einem Aufnahmeraum desselben beweglich aufgenommen. Ein zweiter Abschnitt der Hülse 111 erstreckt sich nach außen aus dem Spektrometer-Messkopf 101 heraus und umgibt dabei den zweiten Abschnitt des Lichtleiters. An den zweiten Abschnitt der Hülse 111 schließt sich ein dritter Abschnitt der Hülse 111 an, welcher die Fluidprobe an ihrem Umfang begrenzt. An den dritten Abschnitt schließt sich wiederum ein Endstück an. Das Endstück verschließt den ringförmigen Querschnitt der Hülse 111 fluiddicht.

Die Messstrecke wird somit zwischen dem Endstück und einer Stirnseite des Lichtleiters definiert. Die Fluidprobe wird entlang des Strahlengangs des Lichtstrahls von dem Endstück und der Stirnseite und, wie erwähnt, umfangsmäßig von dem dritten Abschnitt der Hülse 111 begrenzt. Das Endstück weist den Photosensor sowie bevorzugt eine Linse auf, welche den einfallenden Lichtstrahl auf den Photosensor bündelt.

Indem nun die Hülse 111 aus dem Aufnahmebereich des Spektormeter-Messkopfs 101 hinein oder herausbewegt wird, wird die Messstrecke eingestellt und kann somit einfach an die Anforderungen für eine Konzentrationsmessung eines jeweiligen Analyts angepasst werden.

An der anderen Stirnseite des Lichtleiters wird der Lichtstrahl eingekoppelt.

Die Messvorrichtung 10 weist des Weiteren die zuvor mit Bezug auf die Fig. 1-12 beschriebene Steuerungseinrichtung auf, welche im Falle des mit dem Basisteil 100 verbundenen Spektrometer-Messkopfs 101 beispielsweise die Lichtquellen, den Photosensor usw. des Spektrometer-Messkopfs 101 ansteuert.

Die zuvor beschriebene Anzeigeeinrichtung 20 der Messvorrichtung 10, welche z.B. in dem Basisteil 100 vorgesehen ist, zeigt bei dem in Fig. 13 und 14 eingesetzten Spektrometer-Messkopf 101 z.B. die gemessenen Analyt-Konzentrationen an.

Mittels der zuvor mit Bezug auf die Fig. 1-12 beschriebenen Tasten 105 können Menüs der Anzeigeeinrichtung 20 bedient und eine entsprechende Auswahl ermöglicht werden.

Ebenso können mittels des z.B. in dem Basisteil 100 angeordneten Mikrophons-Einrichtung mit wenigstens einem Mikrophon 102, sowie einer Mikrophon-Aufzeichnungseinrichtung, Informationen von einem Benutzer der Messvorrichtung 10 aufgesprochen und abgespeichert werden. Entsprechendes gilt für die z.B. in dem Basisteil 100 angeordnete Kamera 106 und die Kameradaten-Aufzeichnungseinrichtung.

Die Auswerteeinrichtung zum Auswerten der Daten des Spektrometer-Messkopfs 101 kann Teil der Messvorrichtung 10 und in dem Basisteil 100 und/oder dem Messkopf 101 vorgesehen sein. Zusätzlich oder alternativ kann die Messvorrichtung 10 auch, wie zuvor mit Bezug auf Fig. 1-12 beschrieben, mit einer externen Auswerteeinrichtung koppelbar sein und beispielsweise einen Anschluss, wie zuvor in Fig. 1, 4 und 11, gezeigten USB-Anschluss 104, einen Strom- oder Netzkabelanschluss und/oder einen drahtlosen Anschluss, z.B. einen Bluetooth-Anschluss, Funk-Anschluss, einen Satellitenanschluss vergleichbar einem Satellitentelefon, usw. aufweisen.

Wie zuvor bereits mit Bezug auf Fig. 6 und 7 beschrieben wurde und wie ebenfalls in Fig. 14 gezeigt ist, ist der Messkopf 101 auswechselbar an dem Basisteil 100 angeordnet. Der Messkopf 101 ist dabei wie zuvor beschrieben, z.B. mit dem Basisteil 100 zusammensteckbar ausgebildet. Dabei ist eine elektrische Schnittstelle 107, z.B. elektrische Steckverbindung an dem Basisteil 100 und dem Spektrometer-Messkopf 101 vorgesehen, zum elektrischen Verbinden des Basisteils 100 mit dem Spektrometer-Messkopf 101. Wahlweise zusätzlich kann der Spektrometer-Messkopf 101 ein Rastelement 108 aufweisen, mit welchem der Spektrometer-Messkopf 101 zusätzlich an dem Basisteil 100 einrasten kann. Die Verrastung kann dabei gelöst werden, durch Drücken des Rastelements 108, wie zuvor in Fig. 7 mit einem Pfeil angedeutet ist. Wahlweise zusätzlich weist der Spektrometer-Messkopf 101 Haltenasen 109 auf, welche in entsprechenden Aufnahme 110 des Basisteils 100 aufnehmbar sind, wenn der Spektrometer-Messkopf 101 und das Basisteil 100 zusammengesteckt werden zum Fixieren des Messkopfs 101 an dem Basisteil 100.

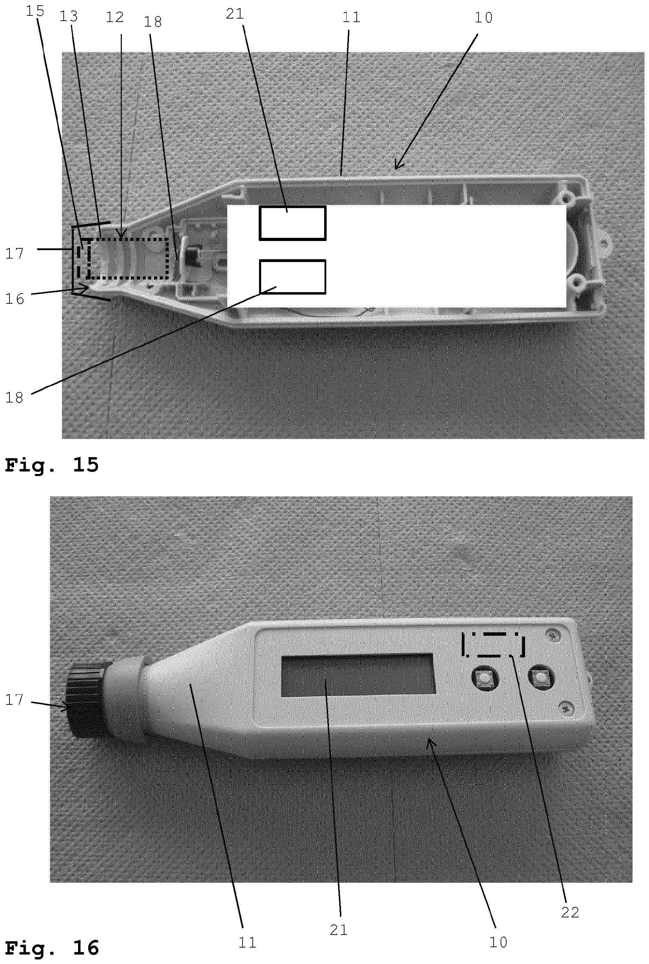

Statt mit einem auswechselbaren Messkopf 101 kann die Messvorrichtung 10 auch wie in dem folgenden Ausführungsbeispiel der Erfindung ausgebildet sein. Das Ausführungsbeispiel wird dabei anhand der Fig. 15 und 16 erläutert.

Fig. 15 zeigt dabei eine Messvorrichtung gemäß einem weiteren Ausführungsbeispiel der vorliegenden Erfindung, wobei bei der Messvorrichtung 10 ein Teil des Gehäuses 11 entfernt ist.

Die Messvorrichtung 10 ist hierbei derart ausgebildet, dass lumineszierende Proben gemessen oder analysiert werden können. Die Lumineszenz, sowie die verschiedenen Arten der Lumineszenz, wie beispielsweise die sog. Photolumineszenz, die sog. Chemolumineszenz und die sog. Biolumineszenz, wurde dabei bereits mit Bezug auf die Fig. 1-12 ausführlich erläutert und werden daher nicht nochmals wiederholt.

Zum Analysieren einer lumineszierenden Probe, weist die Messvorrichtung 10 in dem Gehäuse 11 einen Probenaufnahmeraum 12 auf, in welchen ein Probenbehälter 13 mit der lumineszierenden Probe 14 einbringbar und analysierbar ist. Der Probenbehälter 13 ist dabei beispielsweise mittels eines Deckels verschließbar, insbesondere dicht verschließbar, so dass die Probe nicht ungewollt aus dem Probenbehälter 13 entweichen kann.

Der Probenbehälter 13 ist hierbei transparent, beispielsweise aus einem transparenten Kunststoff oder einem transparenten Glas, zum Hindurchlassen der von der lumineszierenden Probe 14 abgegebenen Strahlung, z.B. sichtbares Licht, und gegebenenfalls zum Hindurchlassen von Strahlung wenigstens einer zusätzlichen Beleuchtungseinrichtung 15 zum Beleuchten der lumineszierenden Probe 14, um diese zum Nachleuchten anzuregen.

Der Probenbehälter 13 kann dabei fest oder lösbar in dem Gehäuse 11 integriert sein. Ist der Probenbehälter 13 lösbar in dem Gehäuse 11 integriert, so kann er leicht aus dem Gehäuse 11 durch eine entsprechende Gehäuseöffnung 16 entnommen, mit der lumineszierenden Probe 14 gefüllt und anschließend in das Gehäuse 11 eingesetzt werden. In dem Fall, dass der Probenbehälter 13 fest in dem Gehäuse 11 integriert ist, kann der Deckel zum Befüllen des Probenbehälters 13 entfernt und nach dem Befüllen des Probenbehälters 13 diesen wieder verschließen. Der Deckel kann ebenfalls wie der Probenbehälter transparent ausgebildet sein.

Die Gehäuseöffnung 16 zum Einsetzen und/oder Befüllen des Probenbehälters 13 ist vorzugsweise mit einem Deckelelement, z.B. einer Verschlusskappe 17, verschließbar ausgebildet, insbesondere lichtdicht verschließbar ausgebildet. Auf diese Weise kann sichergestellt werden, dass kein Licht von außen in das Gehäuse und dessen Probenaufnahmeraum eindringen und das Messergebnis verfälschen kann.

In dem Gehäuse 11, vorzugsweise in dem Probenaufnahmeraum 12 des Gehäuses 11, ist des Weiteren wenigstens eine Strahlungsempfängereinrichtung 18 vorgesehen, zum Empfangen der von der lumineszierenden Probe 14 abgegebenen Strahlung und Umwandeln in elektrische Signale. Als Strahlungsempfängereinrichtung 18 zum Empfangen von Strahlung, wie z.B. Licht usw., der lumineszierenden Probe 14 kann beispielsweise ein Lichtsensor oder Photosensor eingesetzt werden. Der Photosensor kann hierbei wenigstens eine Photodiode aufweisen. Statt eines Lichtsensors oder Photosensors, kann auch jede andere geeignete Strahlungsempfängereinrichtung oder Kombination von Strahlungsempfängereinrichtungen vorgesehen werden, die zum Empfangen der von einer lumineszierenden Probe abgegeben Strahlung, wie z.B. Licht usw., geeignet ist.

Wahlweise zusätzlich kann des Weiteren zum Analysieren einer photolumineszierenden Probe als einem Beispiel für eine lumineszierende Probe 14, in dem Gehäuse 11 die wenigstens eine zusätzliche Beleuchtungseinrichtung 15 vorgesehen werden. Mittels der Beleuchtungseinrichtung 15 wird die lumineszierenden Probe 14 mit einer geeigneten Strahlung beleuchtet, um die lumineszierende Probe 14 zum Nachleuchten anzuregen. Derartig lumineszierende oder photolumineszierende Proben 14 sind beispielsweise fluoreszierende Proben oder phosphorisierende Proben. Die Beleuchtungseinrichtung 15 ist dabei ebenfalls z.B. im Probenaufnahmeraum 12 angeordnet, wie mit einer gestrichelten Linie in Fig. 1 angedeutet ist.

Beispielsweise können mehrere Beleuchtungseinrichtung 15 vorgesehen werden, wobei die Beleuchtungseinrichtungen 15 alle Licht derselben Wellenlänge oder Licht unterschiedlicher Wellenlänge abstrahlen zum Beleuchten der lumineszierenden Probe 14. Dadurch kann eine zu untersuchenden lumineszierenden Probe 14, beispielsweise abwechselnd, mit Licht einer unterschiedlichen Wellenlänge beleuchtet werden, um z.B. mehrere oder verschiedene Analyte zu bestimmen.

Die Strahlungsempfängereinrichtung 18 ist mit einer Auswerteeinrichtung 19 verbunden zum Auswerten der Signale der Strahlungsempfängereinrichtung 18 zum Analysieren der lumineszierenden Probe 14. Des Weiteren ist eine Anzeigeeinrichtung 20 vorgesehen zum Anzeigen des Ergebnisses der Auswertung der Auswerteeinrichtung 19.

Des Weiteren ist zusätzlich eine Steuerungseinrichtung 21 vorgesehen, zum Steuern und/oder Regeln der Beleuchtung der jeweiligen Beleuchtungseinrichtung 15. Beispielsweise kann die Steuerungseinrichtung die Beleuchtungsdauer, die Beleuchtungsstärke, das Beleuchtungsintervall der Beleuchtungseinrichtung 15 steuern und/oder regeln usw.. Mittels der Steuerungseinrichtung 21 können des Weiteren auch mehrere Beleuchtungseinrichtungen 15 gemeinsam oder unabhängig voneinander angesteuert werden zum Analysieren einer lumineszierenden Probe 14 in dem Probenaufnahmeraum 12 der Messvorrichtung 10.

Der Probenaufnahmeraum 12 kann außerdem in dem Gehäuse 11 der Messvorrichtung 10 zusätzlich lichtdicht verschließbar oder von Umgebungslicht abgeschirmt ausgebildet sein, so dass außer Licht einer gegebenenfalls zusätzlich vorhandenen Beleuchtungseinrichtung 15 zum gezielten Beleuchten der lumineszierenden Probe 14 in dem Probenaufnahmeraum 12 kein Licht von außerhalb des Gehäuses 11 der Messvorrichtung 10 oder auch, sofern vorhanden, von Lichtquellen innerhalb des Gehäuses 11 ungewollt in den Probenaufnahmeraum 12 und in die dort enthaltene Probe 14 eindringen kann.

In Fig. 16 ist die Messvorrichtung 10 gemäß Fig. 15 und ihr Gehäuse 11 gezeigt. Wie zuvor mit Bezug auf Fig. 15 beschrieben ist die Gehäuseöffnung 16 zum Einsetzen und/oder Befüllen des Probenbehälters 13 mit einem Deckelelement, z.B. einer Verschlusskappe 17, vorzugsweise dicht verschlossen, insbesondere zumindest lichtdicht. Bei einem lichtdichten Verschließen der Gehäuseöffnung 16 dringt kein Licht von außen ungewollt in das Gehäuse 11 ein. Wie zuvor mit Bezug auf Fig. 15 beschrieben, kann der Probenaufnahmeraum 12 ebenfalls zusätzlich lichtdicht verschließbar oder von Umgebungslicht abgeschirmt ausgebildet sein, wobei in einem Ausführungsbeispiel der Erfindung das Deckelelement 17 beispielsweise ein Ende des Probenaufnahmeraums 12 lichtdicht verschließt, so dass kein Licht ungewollt von außen in das Gehäuse 11 und in den Probenaufnahmeraum 12 gelangen kann.

Wie in Fig. 15 gezeigt, weist die Messvorrichtung 10 eine Display als Anzeigeeinrichtung 20 auf zum Anzeigen des Ergebnisses der Analyse der in dem Probenbehälter enthaltenen Probe. Die Messvorrichtung 10 ist als portable Messvorrichtung 10 ausgebildet und weist eine eigene Energiequelle 22 auf, wie mit einer strichpunktierten Linie in Fig. 15 angedeutet ist, zum Speisen von Einrichtungen, wie der Steuerungseinrichtung, der Auswerteeinrichtung, der Anzeigeeinrichtung, der Beleuchtungseinrichtung, der Strahlungsempfängereinrichtung mit Energie. Die Energiequelle 22 ist dabei beispielsweise eine Batterieeinrichtung und/oder ein Akku. Zusätzlich oder alternativ kann die Messvorrichtung 10 auch einen Kabelanschluss zum Anschließen eines Stromkabels oder ein Stromkabel zum Anschließen an eine Steckdose aufweisen, um die Messvorrichtung 10 mit Energie zu versorgen.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

In einer Ausführungsform der Messvorrichtung 10 gemäß der Fig. 1-12 kann das Deckelelement oder die Verschlussklappe 103 des Messkopfs 101 zum Verschließen der Gehäuseöffnung 16 gleichzeitig zum Verschließen des Probenbehälters 13 ausgebildet sein, so dass der separate Deckel für den Probenbehälter entfallen kann.

Gleiches gilt für die mit Bezug auf die Fig. 15 und 16 beschrieben Ausführungsform. In einer Ausführungsform der Erfindung kann das Deckelelement der Messvorrichtung 10 in den Fig. 15 und 16 zum Verschließen der Gehäuseöffnung gleichzeitig zum Verschließen des Probenbehälters ausgebildet sein, so dass der separate Deckel für den Probenbehälter entfallen kann.

Die zuvor mit Bezug auf die Fig. 1 bis 16 beispielhaft beschriebene Messvorrichtung kann als lumineszierende Probe fest, flüssige, pastöse, pulverförmige und/oder gasförmige Proben sowie Organismen, Zellen, Tiere, wie beispielsweise Insekten usw., sofern sie lumineszierend sind, analysieren.

### Bezugszeichenliste

- 10: Messvorrichtung
- 11: Gehäuse
- 12: Probenaufnahmeraum
- 13: Probenbehälter
- 14: Probe
- 15: Beleuchtungseinrichtung
- 16: Gehäuseöffnung
- 17: Verschlusskappe
- 18: Strahlungsempfängereinrichtung
- 19: Auswerteeinrichtung
- 20: Anzeigeeinrichtung
- 21: Steuerungseinrichtung
- 22: Energiequelle

- 100: Basisteil
- 101: Messkopf
- 102: Mikrophon
- 103: Verschlussklappe
- 104: USB-Anschluss
- 105: Taste
- 106: Kamera
- 107: elektrische Schnittstelle
- 108: Rastelement
- 109: Haltenase
- 110: Aufnahme (Basisteil)
- 111: Hülse
- 112: Langloch

## Patentansprüche

1. Messvorrichtung (10) zum Analysieren einer lumineszierenden Probe (14) und insbesondere Messen der Konzentration wenigstens eines Analyts in einer lumineszierenden Probe (14), aufweisend:
ein Gehäuse (11) mit einem Probenaufnahmeraum (12) zum Aufnehmen eines Probenbehälters (13),
einen Probenbehälter (13) zum Aufnehmen der lumineszierenden Probe (14),
wenigstens eine Beleuchtungseinrichtung (15) zum Beleuchten der lumineszierenden Probe (14), um die lumineszierende Probe (14) zum Nachleuchten anzuregen,
eine Strahlungsempfängereinrichtung (18) zum Empfangen von von der lumineszierenden Probe (14) abgegebenen Strahlung, und
eine Auswerteeinrichtung (19) zum Auswerten der von der Strahlungsempfängereinrichtung (18) empfangenen Strahlung der lumineszierenden Probe, wobei als lumineszierende Probe (14) eine feste, pastöse, pulverförmige,
flüssige und/oder gasförmige lumineszierenden Probe mittels der Messvorrichtung messbar ist,
wobei die Messvorrichtung (10) eine Steuerungseinrichtung (21)aufweist,
wobei die Messvorrichtung (10) als portable Messvorrichtung mit wenigstens einer eigenen Energiequelle ausgebildet ist,
**dadurch gekennzeichnet dass** die Messvorrichtung (10) eine Kamera (106) aufweist mittels der Messbedingungen,
ein Messort und eine Stelle einer Probenentnahme filmbar oder fotografierbar sind, und eine Kameradaten-Aufzeichnungseinrichtung zum Abspeichern der Kameradaten der Kamera (106), wobei die Steuerungseinrichtung (21) die Beleuchtungseinrichtung (15), die Strahlungsempfängereinrichtung, die Kamera (106) und die Kameradaten-Aufzeichnungseinrichtung ansteuert und/oder regelt, und
wobei die Messvorrichtung (10) einen Anschluss zum drahtlosen und/oder drahtgebundenen Anschließen einer externen Einrichtung aufweist zum Koppeln mit der externen Einrichtung zur Übertragung der Kameradaten und
Messdaten an die externe Einrichtung.

2. Messvorrichtung nach Anspruch 1,
**dadurch gekennzeichnet,**
**dass** die lumineszierende Probe (14) eine photolumineszierende Probe ist.

3. Messvorrichtung nach einem der Ansprüche 1 oder 2, **dadurch gekennzeichnet,**
**dass** die Messvorrichtung (10) eine Anzeigeeinrichtung (20) aufweist zum Anzeigen eines Ergebnisses der Auswertung der Auswertungseinrichtung (19) und/oder wobei wenigstens zwei Beleuchtungseinrichtungen (15) vorgesehen sind, wobei die Beleuchtungseinrichtungen (15) durch die Steuerungseinrichtung (21) einzeln und/oder zusammen ansteuerbar sind.

4. Messvorrichtung nach einem der Ansprüche 1 bis 3,
**dadurch gekennzeichnet,**
**dass** eine Gehäuseöffnung (16) mittels eines Deckelelements (17) verschließbar und vorzugsweise lichtdicht verschließbar ist.

5. Messvorrichtung nach einem der Ansprüche 1 bis 4,
**dadurch gekennzeichnet,**
**dass** der Probenaufnahmeraum (12) lichtdicht nach außen abgeschirmt ausgebildet ist.

6. Messvorrichtung nach einem der Ansprüche 1 bis 5,
**dadurch gekennzeichnet,**
**dass** der Probenbehälter (13) fest oder lösbar in dem Probenaufnahmeraum (12) angeordnet und mittels eines Deckels verschließbar ausgebildet ist.

7. Messvorrichtung nach einem der Ansprüche 1 bis 6,
**dadurch gekennzeichnet,**
**dass** die Strahlungsempfängereinrichtung (18) wenigstens einen Lichtsensor und/oder einen Photosensor aufweist.

8. Messvorrichtung nach einem der Ansprüche 1 bis 7,
**dadurch gekennzeichnet,**
**dass** die Messvorrichtung (10) ein Stromkabel zum Anschließen an eine Steckdose oder einen Stromkabelanschluss aufweist zum Anschließen eines Stromkabels.

9. Messvorrichtung nach einem der Ansprüche 1 bis 8,
**dadurch gekennzeichnet,**
**dass** die Messvorrichtung ein Basisteil (100) und einen an dem Basisteil austauschbar angeordneten Messkopf (101) mit einem Probenaufnahmeraum (12) aufweist, wobei der Messkopf (101) den Probenbehälter (13) zum Analysieren einer lumineszierenden Probe (14) aufweist.

10. Messvorrichtung nach Anspruch 9, **dadurch gekennzeichnet, dass** die Kamera und/oder die Kameradaten-Aufzeichnungseinrichtung an dem Basisteil und/oder dem Messkopf (101) vorgesehen ist.

11. Messvorrichtung nach einem der Ansprüche 9 oder 10, **dadurch gekennzeichnet, dass** die Messvorrichtung (10) wenigstens ein Mikrophon und vorzugsweise eine Mikrophon-Aufzeichnungseinrichtung aufweist, wobei das wenigstens eine Mikrophon und/oder die Mikrophon-Aufzeichnungseinrichtung an dem Basisteil und/oder dem Messkopf vorgesehen ist.

12. Messvorrichtung nach einem der Ansprüche 9 bis 11, **dadurch gekennzeichnet, dass** die Messvorrichtung (10) eine Speichereinrichtung zum Speichern von Messdaten des Messkopfs aufweist und/oder wobei die Messvorrichtung (10) eine Anzeigevorrichtung aufweist, wobei die Anzeigevorrichtung an dem Basisteil und/oder dem Messkopf vorgesehen ist.

13. Messvorrichtung nach einem der Ansprüche 9 bis 12, **dadurch gekennzeichnet, dass** der Anschluss insbesondere ein USB-Anschluss, ein Kabelanschluss, ein Bluetooth-Anschluss, ein Satellitenanschluss oder ein Funk-Anschluss ist.

14. Messvorrichtung nach einem der Ansprüche 9 bis 13, **dadurch gekennzeichnet, dass** das Basisteil (100) und der Messkopf (101) zusammensteckbar ausgebildet sind und wobei das Basisteil (100) und der Messkopf (104) eine elektrische Schnittstelle aufweisen zum elektrischen Verbinden des Messkopfs und des Basisteils.

## Claims

1. Measuring device (10) for analysing a luminescent sample (14) and, in particular, for measuring the concentration of at least one analyte in a luminescent sample (14), comprising:
a housing (11) with a sample receptacle space (12) for accommodating a sample container (13),
a sample container (13) for accommodating the luminescent sample (14),
at least one illumination apparatus (15) for illuminating the luminescent sample (14) in order to excite the sample (14) to exhibit afterglow,
a radiation receiver apparatus (18) for receiving radiation emitted by the luminescent sample (14), and
an evaluation apparatus (19) for evaluating the radiation from the luminescent sample received by the radiation receiver apparatus (18), wherein a solid, pasty, powdery and/or gaseous luminescent sample can be measured by the measuring device as a luminescent sample (14),
wherein the measuring device (10) has a control apparatus (21) ,
wherein the measuring device (10) is embodied as a portable measuring device with at least one dedicated energy source,
**characterised in that** the measuring device (10) has a camera (106), by means of which measurement conditions, a measurement location and a site of a sampling can be filmed or
photographed, and a camera data recording apparatus for storing the camera data from the camera (106), wherein the control apparatus (21) actuates and/or regulates the illumination apparatus (15), the radiation receiver apparatus, the camera (106) and the camera data recording apparatus, and wherein the measuring device (10) has a connector for a wireless and/or wired connection of an external apparatus, for coupling to the external apparatus to transmit the camera data and measurement data to the external apparatus.

2. Measuring device as claimed in claim 1, **characterised in that** the luminescent sample (14) is a photoluminescent sample.

3. Measuring device as claimed in claim 1 or 2, **characterised in that** the measuring device (10) has an indication apparatus (20) for indicating a result of the evaluation of the evaluation apparatus (19), and/or wherein at least two illumination apparatuses (15) are provided, wherein the illumination apparatuses (15) can be actuated individually and/or together by the control apparatus (21).

4. Measuring device as claimed in one of claims 1 to 3, **characterised in that** a housing opening (16) can be sealed, and preferably sealed in a light-tight manner, by means of a cover element (17).

5. Measuring device as claimed in one of claims 1 to 4, **characterised in that** the sample receptacle space (12) is embodied in a manner shielded to the outside in a light-tight manner.

6. Measuring device as claimed in one of claims 1 to 5, **characterised in that** the sample container (13) is arranged in the sample receptacle space (12) in a secured or detachable manner and said sample container is embodied in a manner sealable by means of a cover.

7. Measuring device as claimed in one of claims 1 to 6, **characterised in that** the radiation receiver apparatus (18) has at least one light sensor and/or photosensor.

8. Measuring device as claimed in one of claims 1 to 7, **characterised in that** the measuring device (10) has a power lead for connection to a power plug or a power lead connector for connecting a power lead.

9. Measuring device as claimed in one of claims 1 to 8, **characterised in that** the measuring device comprises a base part (100) and a measuring head (101) arranged at the base part in an interchangeable manner and comprising a sample receptacle space (12), wherein the measuring head (101) comprises the sample container (13) for analysing a luminescent sample (14).

10. Measuring device as claimed in claim 9, **characterised in that** the camera and/or camera data recording apparatus is provided at the base part and/or the measuring head (101).

11. Measuring device as claimed in claim 9 or 10, **characterised in that** the measuring device (10) has at least one microphone and preferably a microphone recording apparatus, wherein the at least one microphone and/or the microphone recording apparatus is provided at the base part and/or the measuring head.

12. Measuring device as claimed in one of claims 9 to 11, **characterised in that** the measuring device (10) has a storage apparatus for storing measurement data of the measuring head and/or wherein the measuring device (10) has an indication device, wherein the indication device is provided at the base part and/or the measuring head.

13. Measuring device as claimed in one of claims 9 to 12, **characterised in that** the connector is, in particular, a USB connector, a cable connector, a Bluetooth connector, a satellite connector or a radio connector.

14. Measuring device as claimed in one of claims 9 to 13, **characterised in that** the base part (100) and the measuring head (101) are embodied in such a way that they can be plugged together and wherein the base part (100) and the measuring head (104) have an electric interface for electrically connecting the measuring head and the base part.

## Revendications

1. Dispositif de mesure (10) destiné à l'analyse d'un échantillon luminescent (14) et en particulier à la mesure de la concentration en au moins un analyte dans un échantillon luminescent (14), comportant :
un boîtier (11) doté d'un espace de réception d'échantillon (12) pour recevoir un récipient d'échantillon (13),
un récipient d'échantillon (13) pour recevoir l'échantillon luminescent (14),
au moins un moyen d'éclairage (15) pour éclairer l'échantillon luminescent (14), afin de provoquer une luminescence résiduelle de l'échantillon luminescent (14),
un moyen de réception de rayonnement (18) pour recevoir un rayonnement émis par l'échantillon luminescent (14), et
un moyen d'évaluation (19) pour évaluer le rayonnement de l'échantillon luminescent reçu par le moyen de réception de rayonnement (18), dans lequel, en guise d'échantillon luminescent (14), un échantillon luminescent solide, pâteux, pulvérulent, liquide et/ou gazeux peut être mesuré au moyen du dispositif de mesure,
dans lequel le dispositif de mesure (10) comporte un moyen de commande (21),
dans lequel le dispositif de mesure (10) est réalisé sous la forme d'un dispositif de mesure portable doté d'au moins une source d'énergie propre,
**caractérisé en ce que** le dispositif de mesure (10) comporte une caméra (106) au moyen de laquelle des conditions de mesure, un lieu de mesure et un emplacement de prélèvement d'échantillon peuvent être filmés ou photographiés, et un moyen d'enregistrement de données de caméra pour enregistrer les données de caméra de la caméra (106), le moyen de commande (21) commandant et/ou régulant le moyen d'éclairage (15), le moyen de réception de rayonnement, la caméra (106) et le moyen d'enregistrement de données de caméra, et le dispositif de mesure (10) comportant un organe de raccordement pour le raccordement sans fil et/ou par câble d'un système externe pour le couplage au système externe de sorte à transmettre les données de caméra et les données de mesure au système externe.

2. Dispositif de mesure selon la revendication 1, **caractérisé en ce que**
l'échantillon luminescent (14) est un échantillon photoluminescent.

3. Dispositif de mesure selon une des revendications 1 ou 2, **caractérisé en ce que**
le dispositif de mesure (10) comporte un moyen d'affichage (20) pour afficher un résultat de l'évaluation du moyen d'évaluation (19) et/ou dans lequel au moins deux moyens d'éclairage (15) sont prévus, les moyens d'éclairage (15) pouvant être commandés individuellement et/ou conjointement par le moyen de commande (21).

4. Dispositif de mesure selon une des revendications 1 à 3, **caractérisé en ce que**
une ouverture de boîtier (16) peut être fermée au moyen d'un élément de couvercle (17) et peut de préférence être fermée de manière étanche à la lumière.

5. Dispositif de mesure selon une des revendications 1 à 4, **caractérisé en ce que**
l'espace de réception d'échantillon (12) est conçu isolé par rapport à l'extérieur de manière étanche à la lumière.

6. Dispositif de mesure selon une des revendications 1 à 5, **caractérisé en ce que**
le récipient d'échantillon (13) est disposé fixement ou de manière détachable dans l'espace de réception d'échantillon (12) et est conçu de façon à pouvoir être fermé au moyen d'un couvercle.

7. Dispositif de mesure selon une des revendications 1 à 6, **caractérisé en ce que**
le moyen de réception de rayonnement (18) comporte au moins un capteur de lumière et/ou un photocapteur.

8. Dispositif de mesure selon une des revendications 1 à 7, **caractérisé en ce que**
le dispositif de mesure (10) comporte un câble électrique pour le raccordement à une prise de courant ou un organe de raccordement pour câble électrique pour le raccordement d'un câble électrique.

9. Dispositif de mesure selon une des revendications 1 à 8, **caractérisé en ce que**
le dispositif de mesure comporte une partie de base (100) et une tête de mesure (101) dotée d'un espace de réception d'échantillon (12) et disposée de manière remplaçable sur la partie de base, la tête de mesure (101) comportant le récipient d'échantillon (13) pour analyser un échantillon luminescent (14).

10. Dispositif de mesure selon la revendication 9, **caractérisé en ce que**
la caméra et/ou le moyen d'enregistrement de données de caméra sont prévus sur la partie de base et/ou la tête de mesure (101) .

11. Dispositif de mesure selon une des revendications 9 ou 10, **caractérisé en ce que**
le dispositif de mesure (10) comporte au moins un microphone et de préférence un moyen d'enregistrement par microphone, l'au moins un microphone et/ou le moyen d'enregistrement par microphone étant prévus sur la partie de base et/ou sur la tête de mesure.

12. Dispositif de mesure selon une des revendications 9 à 11, **caractérisé en ce que**
le dispositif de mesure (10) comporte un moyen formant mémoire pour enregistrer des données de mesure de la tête de mesure et/ou dans lequel le dispositif de mesure (10) comporte un dispositif d'affichage, le dispositif d'affichage étant prévu sur la partie de base et/ou la tête de mesure.

13. Dispositif de mesure selon une des revendications 9 à 12, **caractérisé en ce que**
l'organe de raccordement est en particulier un organe de raccordement USB, un organe de raccordement pour câble, un organe de raccordement Bluetooth, un organe de raccordement satellite ou un organe de raccordement radio.

14. Dispositif de mesure selon une des revendications 9 à 13, **caractérisé en ce que**
la partie de base (100) et la tête de mesure (101) sont conçues de façon à pouvoir être assemblées et dans lequel la partie de base (100) et la tête de mesure (104) comportent une interface électrique pour le raccordement électrique de la tête de mesure et de la partie de base.
